(19) Europäisches Patentamt / European Patent Office / Office européen des brevets

(11) **EP 2 652 463 B1**

(12) **EUROPÄISCHE PATENTSCHRIFT**

(45) Veröffentlichungstag und Bekanntmachung des Hinweises auf die Patenterteilung:
**22.05.2019   Patentblatt 2019/21**

(21) Anmeldenummer: **10795342.4**

(22) Anmeldetag: **16.12.2010**

(51) Int Cl.:
**G01F 23/284** *(2006.01)*     **G01F 23/296** *(2006.01)*

(86) Internationale Anmeldenummer:
**PCT/EP2010/069997**

(87) Internationale Veröffentlichungsnummer:
**WO 2012/079643 (21.06.2012 Gazette 2012/25)**

(54) **VORRICHTUNG ZUR EMULSIONSMESSUNG MIT EINEM STANDROHR**

DEVICE FOR MEASURING EMULSIONS, COMPRISING A VERTICAL TUBE

DISPOSITIF POUR LA MESURE D'UNE ÉMULSION COMPORTANT UN TUBE VERTICAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.10.2013   Patentblatt 2013/43**

(73) Patentinhaber: **VEGA Grieshaber KG**
**77709 Wolfach (DE)**

(72) Erfinder:
• **WELLE, Roland**
  **77709 Oberwolfach (DE)**
• **GRIESSBAUM, Karl**
  **77796 Mühlenbach (DE)**

(74) Vertreter: **Maiwald Patent- und Rechtsanwaltsgesellschaft mbH**
**Elisenhof**
**Elisenstraße 3**
**80335 München (DE)**

(56) Entgegenhaltungen:
**DE-A1- 10 325 953        US-A- 5 062 295**
**US-A1- 2001 010 171**

• **Anonymous: "Guided Microwave - VEGAFLEX", VEGA , 21. September 2010 (2010-09-21), Seiten 37-38, XP002629699, Gefunden im Internet: URL:http://www.vega.com/downloads/AL/EN/34 138-EN.PDF [gefunden am 2010-09-21]**
• **Anonymous: "Operating Instructions VEGAFLEX 61", VEGA , 26. April 2010 (2010-04-26), Seite 1,16, XP002629700, Gefunden im Internet: URL:http://www.vega-technique.fr/downloads /BA/31833-EN.PDF [gefunden am 2010-04-26]**

**Beschreibung**

Gebiet der Erfindung

Die vorliegende Erfindung betrifft die Messung von Füllständen, Trennschichten und Emulsionen aller Art. Insbesondere betrifft die Erfindung eine Messvorrichtung, die nach einem Laufzeitverfahren arbeitet, ein Verfahren zur Trennschicht- und Emulsionsmessung und eine Verwendung der Messvorrichtung.

Technischer Hintergrund

Bei den nach dem FMCW oder Impuls - Laufzeitverfahren arbeitenden Füllstandsensoren werden elektromagnetische oder akustische Wellen in Richtung einer Füllgutoberfläche emittiert. Daran anschließend zeichnet ein Sensor die vom Füllgut, den Behältereinbauten und dem Behälter selbst reflektierten Echosignale auf, und leitet daraus den jeweiligen Füllstand ab.

Zu den Füllstandsensoren, welche nach einem Laufzeitverfahren arbeiten, mögen beispielsweise Sensoren gehören, welche unter Verwendung von Ultraschall, Radar, geführtem Radar, FMCW - Radar, Impuls - Radar, CW - Radar oder Laser den Abstand zu einer Füllgutoberfläche bestimmen. Weiterhin mögen alle Sensoren, welche eine Welle absenden, und deren von einer Füllgutoberfläche reflektierten Anteile wieder empfangen und auswerten, als Füllstandsensoren, welche nach einem Laufzeitverfahren arbeiten, definiert sein.

Bei der Verwendung akustischer oder optischer Wellen breitet sich das vom Füllstandmessgerät erzeugte Signal im Allgemeinen frei in Richtung der zu vermessenden Füllgutoberfläche aus. Bei Geräten, welche Radarwellen zur Vermessung der Füllgutoberfläche benutzen, kommt sowohl eine freie Ausbreitung in Richtung des zu vermessenden Mediums in Betracht, als auch eine Ausbreitung im Inneren eines Hohlleiters, welcher die Radarwellen vom Füllstandmessgerät zum Medium führt. Bei Geräten nach dem Prinzip der geführten Mikrowelle werden die hochfrequenten Signale entlang eines Wellenleiters zum Medium hin geführt.

An der Oberfläche des zu vermessenden Mediums wird ein Teil der ankommenden Signale reflektiert, und gelangt nach entsprechender Laufzeit wieder zurück zum Füllstandmessgerät. Die nicht reflektierten Signalanteile dringen in das Medium ein, und breiten sich entsprechend den physikalischen Eigenschaften des Mediums in diesem weiter in Richtung des Behälterbodens aus. Am Behälterboden werden diese Signale reflektiert, und gelangen nach Passage des Mediums und der überlagerten Atmosphäre wieder zurück zum Füllstandmessgerät.

Es ist wünschenswert, Füllstandmessgeräte darüber hinaus zur Trennschichtmessung und auch zur Emulsionsmessung einzusetzen.

Im Bereich der Trennschichtmessung werden üblicherweise zwei unterschiedliche Flüssigkeiten in einen Behälter gefüllt. Bedingt durch die unterschiedlichen Dichten dieser zumindest zwei Flüssigkeiten entmischen sich diese im Behälter, sofern hinreichend ruhige Verhältnisse vorhanden sind, d.h. die Flüssigkeiten nicht durch ein Rührwerk oder sonstige Einrichtungen daran gehindert werden, sich zu entmischen.

DE 10 2007 061 574 A1 beschreibt ein Verfahren zur Vermessung von Emulsionen durch Kombination einer Messung auf Basis geführter Mikrowelle mit einer kapazitiven Messung.

US 2001/010171 A1 beschreibt ein Füllstandmesssystem für einen Flugzeugtank mit einer Mehrzahl an Messsonden, die den Füllstand in verschiedenen Bereichen des Tanks messen.

US 5 062 295 A beschreibt ein Messsystem zum Bestimmen des Füllstands in einem Tank mit zwei Messröhren mit jeweils einer Sonde.

DE 103 25 953 A1 beschreibt ein Verfahren und eine Vorrichtung zur Messung von Niveauhöhen geschichteter Flüssigkeiten in einem Behälter, bei der ein Sendepuls eines Ultraschallwandlers von unten oder oben in die geschichteten Flüssigkeiten schallt.

Zusammenfassung der Erfindung

Es ist eine Aufgabe der Erfindung, eine alternative Vorrichtung und ein alternatives Verfahren zur Emulsionsmessung anzugeben, durch welche das Mischungsverhältnis von zwei oder mehr verschiedenen Flüssigkeiten bestimmt werden kann, gemäß den Definitionen von Ansprüche 1 und 10.

Unter dem Begriff "virtueller Trennschicht" ist hierbei eine Trennschicht zwischen zwei verschiedenen Flüssigkeiten zu verstehen, die sich bilden würde, falls sich die Emulsion, die aus den zwei oder mehreren Flüssigkeiten besteht, zurückbilden würde. Dies kann beispielsweise dann geschehen, wenn die gesamte Flüssigkeit nicht bewegt, beispielsweise verrührt, wird, so dass sich die einzelnen Flüssigkeiten voneinander trennen.

Gemäß einem weiteren Aspekt der Erfindung ist die Verwendung einer oben und im Folgenden beschriebenen Messvorrichtung zur Bestimmung zumindest eines Kennwertes für den Füllstand und/oder die Lage einer tatsächlich vorhandenen oder virtuellen Trennschicht zwischen zwei verschiedenen Flüssigkeiten in einem Teilbereich eines Behälters angegeben. Weiterhin ist die Verwendung einer oben und im Folgenden beschriebenen Messvorrichtung zur Bestimmung zumindest eines Kennwertes für die Zusammensetzung eines Gemischs aus zwei oder mehr verschiedenen Flüssigkeiten in einem Behälter angegeben.

Es ist zu beachten, dass die oben und im Folgenden beschriebenen Merkmale auf alle drei Aspekte (Vorrichtung, Verfahren, Verwendung) angewendet werden können. In anderen Worten lassen sich Merkmale, die im Folgenden im Hinblick auf das Verfahren beschrieben sind, auch in der Vorrichtung implementieren, und umgekehrt.

Gemäß einer Ausführungsform der Erfindung ist der erste Teilbereich des Behälters durch den Innenraum eines Standrohres ausgebildet.

Gemäß einer weiteren Ausführungsform der Erfindung ist der erste Teilbereich des Behälters durch ein Bypassrohr des Behälters ausgebildet.

Gemäß einer weiteren Ausführungsform der Erfindung ist die Verbindung zwischen den beiden Teilbereichen durch eine erste Öffnung im ersten Teilbereich des Behälters, welche sich in der Nähe des Behälterbodens befindet, und durch eine zweite Öffnung im ersten Teilbereich des Behälters, welche sich bei ordnungsgemäß befülltem Behälter oberhalb der Füllmedien befindet, ausgebildet.

Es sind also nur zwei Öffnungen im ersten Teilbereich vorgesehen.

Gemäß der Erfindung sind der erste Teilbereich und die Verbindungen zwischen den beiden Teilbereichen derart ausgeführt, dass bei Zugabe einer bestimmten Menge an Flüssigkeit in dem zweiten Teilbereich das Niveau einer sich im ersten Teilbereich bildenden Flüssigkeitssäule ungleich ist dem Niveau einer Flüssigkeitssäule im zweiten Teilbereich.

Dies kann dadurch erreicht werden, dass eine hinzugegebene, leichtere Flüssigkeit nicht durch die untere Verbindung (oder zumindest nicht in wesentlicher Menge) in den ersten Teilbereich gelangen kann.

Gemäß einer weiteren Ausführungsform der Erfindung sind die erste Messeinrichtung und die zweite Messeinrichtung identische Einrichtungen. Beispielsweise handelt es sich hierbei um Füllstandmessgeräte, beispielsweise Füllstandradare, Ultraschall-Füllstandmesseinrichtungen oder Geräte, welche nach dem Prinzip der geführten Mikrowellen arbeiten.

Gemäß einer weiteren Ausführungsform der Erfindung handelt es sich zumindest bei einer der beiden Messeinrichtungen um eine Einrichtung, welche ein elektromagnetisches Sendesignal oder ein akustisches Sendesignal aussendet.

Gemäß einer weiteren Ausführungsform der Erfindung arbeitet die erste Messeinrichtung nach dem Prinzip der geführten Mikrowellen und weist einen Innenleiter auf, der innerhalb des ersten Teilbereichs angeordnet ist, wobei der Innenleiter und eine Wandung des ersten Teilbereichs einen Koaxialleiter ausbilden, so dass die Echokurve innerhalb des ersten Teilbereichs mit Hilfe des aus dem Innenleiter und der Wandung des ersten Teilbereichs ausgebildeten Koaxialleiters ermittelt wird.

Gemäß einer weiteren Ausführungsform der Erfindung ist die Messvorrichtung weiterhin zur Erfassung und Ausgabe zumindest eines Kennwertes für den Füllstand im zweiten Teilbereich des Behälters ausgeführt. Es können also nicht nur Mischungsverhältnisse oder Trennschichtpositionen bestimmt werden.

Gemäß einer weiteren Ausführungsform der Erfindung erfolgt die Bestimmung des zumindest einen Kennwerts für die Lage einer tatsächlich vorhandenen oder virtuellen Trennschicht zwischen den zwei verschiedenen Flüssigkeiten des Füllmediums im zweiten Bereich oder des zumindest einen Kennwerts für die Zusammensetzung des Gemisches aus den zwei verschiedenen Flüssigkeiten ohne eine Zuhilfenahme einer kapazitiven Messung.

Es sind lediglich die erfassten Echokurven notwendig, um das Mischungsverhältnis der zwei oder mehr Flüssigkeiten im zweiten Teilbereich des Behälters oder die Lage einer virtuellen Trennschicht zu bestimmen.

Gemäß einer weiteren Ausführungsform der Erfindung erfolgt die Bestimmung des Dichteverhältnisses der beiden Flüssigkeiten anhand einer Messung, bei welcher der zumindest eine Kennwert für den Füllstand der zwei verschiedenen Flüssigkeiten und der zumindest eine Kennwert für die Lage der Trennschicht zwischen den beiden Flüssigkeiten in dem ersten und dem zweiten Teilbereich des Behälters bestimmt wird.

Gemäß einer weiteren Ausführungsform der Erfindung erfolgt ein Vermischen der beiden Flüssigkeiten in dem zweiten Teilbereich, nachdem das Dichteverhältnis bestimmt wurde und bevor die zwei Hauptmess-Schritte durchgeführt werden.

Im Folgenden werden mit Verweis auf die Figuren Ausführungsbeispiele der Erfindung beschrieben.

Kurze Beschreibung der Figuren

Fig. 1 zeigt eine Anordnung zur Füllstandmessung.

Fig. 2 zeigt die Auswertung von Echosignalen.

Fig. 3 zeigt eine Anordnung zur Füllstand- und Trennschichtmessung.

Fig. 4 zeigt eine Füllstand- und Trennschichtmessung bei ungünstigen Schichtdicken.

Fig. 5 zeigt eine Emulsionsmessung mit geführter Mikrowelle.

Fig. 6 zeigt eine Anordnung einer Messvorrichtung gemäß einem Ausführungsbeispiel der Erfindung.

Fig. 7 zeigt die erfassten Echosignale gemäß einem Ausführungsbeispiel der Erfindung.

Fig. 8 zeigt eine Anordnung zur Emulsionsmessung gemäß einem weiteren Ausführungsbeispiel der Erfindung.

Fig. 9 zeigt die Echosignale bei der Emulsionsmessung gemäß einem Ausführungsbeispiel der Erfindung.

Fig. 10A bis 10I zeigen Messvorrichtung gemäß Ausführungsbeispielen der Erfindung.

Fig. 11 zeigt eine Vorrichtung zur Trennschichtmessung sowie eine entsprechende Echokurve.

Fig. 12 zeigt eine Vorrichtung zur Emulsionsmessung sowie eine entsprechende Echokurve.

Fig. 13A bis 13C zeigen Vorrichtungen zur Trennschicht- und Emulsionsmessung.

Fig. 14 zeigt ein Flussdiagramm eines Verfahrens gemäß einem Ausführungsbeispiel der Erfindung.

Fig. 15 zeigt den Aufbau verschiedener Geräteelektroniken für die Messvorrichtung gemäß einem Ausführungsbeispiel der Erfindung.

Detaillierte Beschreibung von Ausführungsbeispielen

Die Darstellungen in den Figuren sind schematisch und nicht maßstäblich.

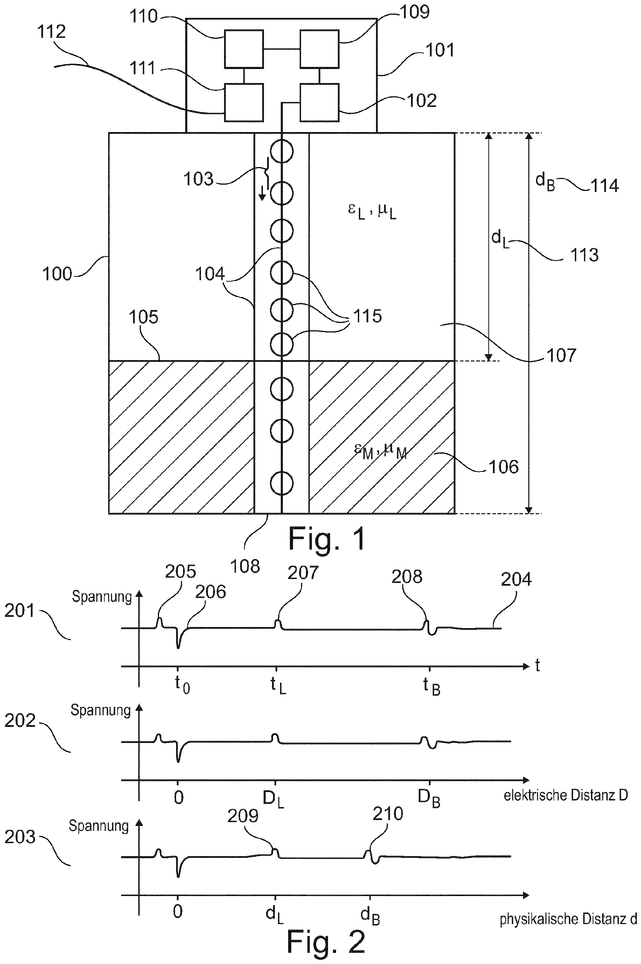

Fig. 1 zeigt eine Anordnung zur Füllstandmessung. Es ist wünschenswert, dass moderne Füllstandmessgeräte neben dem Gesamtfüllstand im Behälter auch die Lage der sich bildenden Trennschicht zwischen zwei verschiedenen Medien ermitteln können.

Diese Aufgabe kann unter Verwendung elektromagnetischer Wellen gelöst werden. Dabei wird der Sachverhalt ausgenutzt, dass ein Teil der vom Füllstandmessgerät abgestrahlten Signale an der Oberfläche der obersten Flüssigkeit reflektiert wird, der verbliebene Anteil aber in diese oberste Flüssigkeitsschicht eindringt, und nach entsprechender Laufzeit auf die Trennschicht zwischen den beiden Flüssigkeiten trifft. An dieser Trennschicht wird wiederum ein Teil der Signalenergie reflektiert, und gelangt nach entsprechender Laufzeit zurück zum Füllstandmessgerät. Eventuell noch verbliebene Signalenergie durchläuft auch die zweite Flüssigkeit, und wird schließlich vom Behälterboden reflektiert.

Das Füllstandmessgerät empfängt die an verschiedenen Stellen reflektierten Signale und bestimmt daraus nach bekannten Verfahren die Distanz zum Füllgut.

Schwieriger gestalten sich die Verhältnisse, wenn bedingt durch fortwährende Bewegung der Medien in einem Behälter eine Entmischung verschiedener Flüssigkeiten verhindert wird oder nur teilweise erfolgen kann. Bedingt durch die fehlerhafte Lage einer sich bildenden Trennschicht oder das gänzliche Ausbleiben einer Trennschichtbildung zwischen den Medien kann eine ausschließliche Vermessung der Emulsion mit Hilfe elektromagnetischer Wellen nicht durchgeführt werden. Gegenwärtig werden zu diesem Zweck andere Messverfahren (Druck, kapazitive Messungen) oder Kombinationen von Radarfüllstandmessungen und anderen Verfahren verwendet.

Die bestimmte Distanz zum Füllgut wird nach außen hin bereitgestellt. Die Bereitstellung kann in analoger Form (beispielsweise unter Verwendung einer 4..20 mA Schnittstelle) oder auch in digitaler Form (beispielsweise durch Verwendung eines Feldbus) realisiert werden.

Der prinzipielle Aufbau von Radar-Füllstandsensoren ist im Buch von Peter Devine: Füllstandmessung mit Radar Leitfaden für die Prozessindustrie (ISBN 3-00-008216-6) ausführlich dargestellt.

Die nachfolgenden Ausführungen konzentrieren sich auf den sehr wichtigen Bereich der Füllstandmessung mit Hilfe elektromagnetischer Wellen. Es sei jedoch darauf hingewiesen, dass auch bei der Verwendung akustischer Wellen eine Vermessung der Füllgutoberfläche oder einer sich bildenden Trennschicht zwischen zwei verschiedenen Medien möglich ist. Akustische Wellen werden durch unterschiedliche Dichteverhältnisse zu durchlaufender Medien in ihrer Ausbreitung ebenfalls beeinflusst. Es ist einem Fachmann daher möglich, die nachfolgend dargestellten Ideen zur Füllstandmessung, Trennschichtmessung und/oder Emulsionsmessung, vom Anwendungsfall elektromagnetischer Wellen auf den Anwendungsfall akustischer Wellen zu übertragen.

In den Geräten zur Füllstandmessung, Trennschichtmessung und/oder Emulsionsmessung können verschiedene Verfahren zur Bestimmung des Gesamtfüllstandes und/oder der Lage einer Trennschicht zwischen zwei verschiedenen Medien verwendet werden.

Die hier beschriebene Implementierungsform basiert auf einer Anordnung, welche den Füllstand und oder die Lage einer Trennschicht nach dem Prinzip der geführten Mikrowelle bestimmt. Es ist jedoch auch möglich, entsprechende Vorrichtungen nach den oben dargelegten Messprinzipien, insbesondere unter Verwendung frei strahlender Radarwellen, zu realisieren.

Fig. 1 zeigt eine beispielhafte Anordnung zur Füllstandmessung. Der Behälter 100 ist bis zu einer Füllhöhe $d_B$ - $d_L$ mit einer Flüssigkeit 106 gefüllt. Der Raum über der Flüssigkeit 107 sei zunächst mit Luft gefüllt.

Ein nach dem Prinzip der geführten Mikrowelle arbeitendes Füllstandmessgerät 101 erzeugt mit Hilfe einer Hochfrequenzeinheit 102 einen elektromagnetischen Impuls 103 und koppelt diesen in einen Wellenleiter 104 ein, woraufhin sich dieser Impuls annähernd mit Lichtgeschwindigkeit in Richtung der zu vermessenden Füllgutoberfläche 105 im Inneren des Wellenleiters ausbreitet.

Der dargestellte Wellenleiter 104 ist im vorliegenden Beispiel in Form eines Koaxialleiters ausgeführt. Selbstverständlich sind aber alle in der Literatur beschriebenen Wellenleiter, also insbesondere Eindraht- oder Mehrdrahtleitungen, einsetzbar.

Der üblicherweise für die Füllstandmessung verwendete Koaxialleiter 104 besteht aus einem Rohr, welches in gleichmäßigen Abständen Bohrungen 115 aufweist, welche ein Eindringen der zu messenden Flüssigkeit 106 in den Bereich zwischen dem Außenleiter (Rohr) und dem Innenleiter ermöglichen.

Die Füllgutoberfläche 105 reflektiert einen Teil der ankommenden Signalenergie, woraufhin sich der reflektierte Signalanteil entlang des Wellenleiters 104 wieder zurück zum Füllstandmessgerät 101 fortpflanzt. Der nicht reflektierte Signalanteil dringt in die Flüssigkeit 106 ein, und pflanzt sich darin mit stark verminderter Geschwindigkeit entlang des Wellenleiters 104 fort. Die Geschwindigkeit $c_{Medium}$ der elektromagnetischen Welle 103 innerhalb der Flüssigkeit 106 wird durch die Materialeigenschaften der Flüssigkeit 106 bestimmt:

$$c_{Medium} = \frac{c_0}{\sqrt{\varepsilon_R \cdot \mu_R}}$$

wobei $c_0$ die Lichtgeschwindigkeit im Vakuum, $\varepsilon_R$ die Permittivitätszahl der Flüssigkeit und $\mu_R$ die Permeabilitätszahl der Flüssigkeit beschreibt. Am unteren Ende 108 des Wellenleiters 104 wird der verbliebene Signalanteil ebenfalls reflektiert, und gelangt nach entsprechender Laufzeit wieder zurück zum Füllstandmessgerät 101. Im Füllstandmessgerät werden die ankommenden Signale mit Hilfe der Hochfrequenzeinheit 102 aufbereitet, und vorzugsweise in einen niederfrequenteren Zwischenfrequenzbereich transformiert. Mit Hilfe einer Analog-Digital-Wandlereinheit 109 werden die analogen Echokurven, welche von der Hochfrequenzeinheit 102 bereitgestellt werden, digitalisiert und einer Auswerteeinheit 110 zur Verfügung gestellt. Die Auswerteeinheit 110 analysiert die digitalisierte Echokurve, und bestimmt auf Basis der darin enthaltenen Echos nach bekannten Verfahren dasjenige Echo, das von der Reflektion an der Füllgutoberfläche 105 erzeugt wurde. Zudem bestimmt die Auswerteeinheit die exakte Distanz bis zu diesem Echo. Weiterhin wird die exakte Distanz zum Echo derart korrigiert, dass Einflüsse der überlagerten Gasatmosphäre 107 auf die Ausbreitung der elektromagnetischen Wellen kompensiert werden. Die so errechnete, kompensierte Distanz zum Füllgut 113 wird einer Ausgabeeinheit 111 bereitgestellt, welche den bestimmten Wert entsprechend den Vorgaben des Benutzers weiter aufbereitet, beispielsweise durch Linearisierung, Offsetkorrektur, Umrechnung in eine Füllhöhe $d_B$ - $d_L$. Der aufbereitete Messwert wird an einer externen Kommunikationsschnittstelle 112 nach außen hin bereitgestellt. Hierbei können alle etablierten Schnittstellen verwendet werden, insbesondere 4..20mA - Stromschnittstellen, industrielle Feldbusse wie HART, Profibus, FF, oder aber auch Computerschnittstellen wie RS232, RS485, USB, Ethernet, FireWire.

Fig. 2 verdeutlicht nochmals im Detail wichtige Schritte, die im Rahmen der Echosignalverarbeitung in der Auswerteeinheit 110 zur Kompensation der Einflüsse verschiedener Medien angewendet werden.

Der Kurvenzug 201 zeigt zunächst die von der Analog-Digital-Wandlereinheit 109 über der Zeit hinweg erfasste Echokurve 204. Die Echokurve beinhaltet zunächst den Sendeimpuls 205. Kurze Zeit später wird zum Zeitpunkt $t_0$ eine erste Reflektion 206 erfasst, welche durch die Einkopplung des Hochfrequenzsignals auf den Wellenleiter 104 verursacht wird. Eine weitere Reflektion 207 entstammt der Füllgutoberfläche 105 und wird zum Zeitpunkt tL erfasst. Das vom unteren Ende 108 des Wellenleiters 104 erzeugte Echo 208 wird schließlich zum Zeitpunkt $t_B$ erfasst.

In einem ersten Verarbeitungsschritt wird die zeitabhängige Kurve 201 in eine distanzabhängige Kurve 202 transformiert. Während dieser Transformation wird davon ausgegangen, dass sich die erfasste Kurve ausschließlich durch eine Ausbreitung im Vakuum gebildet hat. Die Ordinate der Darstellung 201 wird durch Multiplikation mit der Lichtgeschwindigkeit im Vakuum in eine Distanzachse umgerechnet. Zudem wird durch Verrechnung eines Offsets erreicht, dass das von der Einkopplung des Hochfrequenzsignals verursachte Echo 206 den Distanzwert 0m erhält.

Die zweite Darstellung 202 zeigt die Echokurve als Funktion der elektrischen Distanz D. Die elektrische Distanz entspricht derjenigen Distanz, die eine elektromagnetische Welle im Vakuum in einer bestimmten Zeit zurücklegt. Die elektrische Distanz berücksichtigt keinerlei Einflüsse eines Mediums, welche möglicherweise zu einer langsameren Ausbereitung der elektromagnetischen Wellen führen. Kurvenzug 202 stellt daher eine unkompensierte, aber auf Orte bezogene Echokurve dar.

In der vorliegenden Beschreibung werden elektrische Distanzen immer mit Großbuchstaben D bezeichnet, wohingegen physikalische Distanzen, welche direkt am Behälter nachgemessen werden können, mit kleinen Buchstaben d bezeichnet werden.

Es mag weiterhin möglich sein, die Echokurve der Darstellung 202 vollständig zu kompensieren. Die dritte Darstellung 203 zeigt eine vollkompensierte Echokurve. Um eine Darstellung der Echos über der physikalischen Distanz zu erreichen, muss im vorliegenden Fall der Einfluss des Überlagerungsmediums 107 im Bereich zwischen den Orten 0 und $D_L$ (Kurvenzug 202) berücksichtigt werden. Die elektrischen Distanzangaben der Abszisse müssen zwischen 0 und $D_L$ in physikalische Distanzangaben gemäß folgendem Zusammenhang umgerechnet werden:

$$d_i = \frac{D_i}{\sqrt{\varepsilon_L \cdot \mu_L}}$$

Da $\varepsilon_{Luft}$ und $\mu_{Luft}$ in guter Näherung dem Wert 1 entsprechen, muss für diesen Abschnitt keine Korrektur erfolgen. Die elektrischen Distanzangaben der Abszisse zwischen $D_L$ und $D_B$ müssen jedoch in physikalische Distanzangaben gemäß folgendem Zusammenhang umgerechnet werden:

$$d_i = \frac{D_i}{\sqrt{\varepsilon_M \cdot \mu_M}}$$

Die dritte Darstellung 203 zeigt schließlich den korrigierten Verlauf. Sowohl die Distanz zum Echo 209 der Füllgutoberfläche als auch die Distanz des vom unteren Ende 108 des Wellenleiters 104 erzeugten Echos 210 stimmen mit den am Behälter 100 nachmessbaren Distanzen 113, 114 überein.

Es sei an dieser Stelle darauf hingewiesen, dass die Umsetzung in Kurvenzug 202, also die Bestimmung der elektrischen Distanzen verschiedener Echos, im Rahmen der Signalverarbeitung im Gerät für alle Echos durchgeführt wird. Die Umsetzung der Echokurve in eine kompensierte Echokurve wird im Allgemeinen nicht durchgeführt, genügt doch die Korrektur eines einzelnen Füllstandwertes.

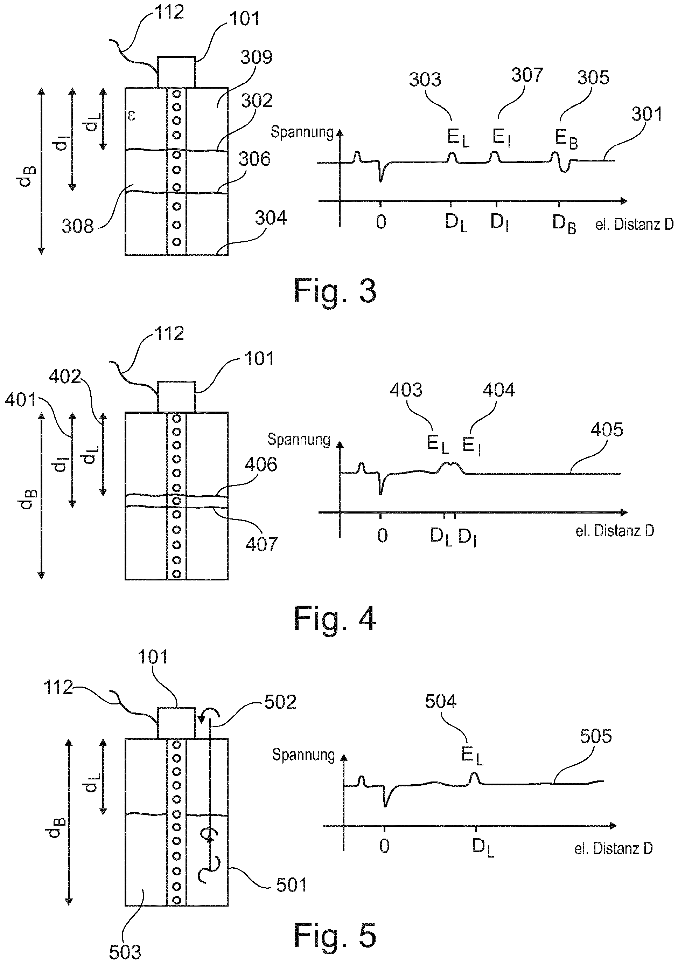

Fig. 3 zeigt eine Anordnung zur Füllstand- und Trennschichtmessung. Das Füllstandmessgerät 101 erfasst zunächst die Echokurve 301, welche neben dem von der Füllgutoberfläche 302 erzeugten Echo ($E_L$) 303 auch ein von der Trennschicht 306 erzeugtes Echo ($E_I$) 307 aufweist. Aus Gründen der Vollständigkeit enthält die Echokurve 301 auch ein vom Behälterboden 304 erzeugtes Echo ($E_B$) 305, welches in der Praxis nur äußerst selten detektiert werden kann, da durch die Reflexion an der Oberfläche 302 sowie an der Trennschicht 306 nahezu die gesamte Energie des vom Füllstandmessgerät abgestrahlten Signals reflektiert wird.

Unter der Annahme überlagerter Luft ($\varepsilon_{Luft} = \mu_{Luft} = 1$) oder entsprechend abweichender Parametrierung durch den Anwender ergibt sich aus der von der Logikeinheit 110 bestimmten, elektrischen Distanz zur Füllgutoberfläche die physikalische Distanz gemäß:

$$d_L = \frac{D_L}{\sqrt{\varepsilon_L \cdot \mu_L}}$$

Weiterhin wird gemäß dem Stand der Technik vorausgesetzt, dass $\varepsilon_I$ und $\mu_I$, also die Permeabilitätszahl und die Permittivitätszahl des Trennschichtmediums 308 durch Anwendereingabe bekannt sind. Es folgt daher für die Distanz zur Trennschicht:

$$d_I = d_L + \frac{D_I - D_L}{\sqrt{\varepsilon_I \cdot \mu_I}}$$

Es wird unmittelbar ersichtlich, dass das Verfahren in der praktischen Umsetzung Probleme verursacht. Zum einen müssen die Permittivitätszahlen und die Permeabilitätszahlen sowohl der Überlagerungsatmosphäre 309 als auch diejenigen des Trennschichtmediums 308 vorab bekannt sein, oder vom Anwender manuell eingegeben werden. Dies führt zumindest zu einer wenig komfortablen Bedienung, und verursacht große Probleme immer dann, wenn die Eigenschaften des Überlagerungsmediums 309 und/oder des Trennschichtmediums 308 während der Laufzeit Veränderungen unterworfen sind. Diese können zum einen durch eine Befüllung mit einem anderen Medium, aber auch bei einer Abhängigkeit der Materialkennwerte von äußeren Einflüssen wie Druck und/oder Temperatur schwanken.

Das oben beschriebene Verfahren kann Schwächen aufweisen, wenn die Distanz zur Trennschicht 401 nur unwesentlich größer ist als die Distanz zur Oberfläche 402 des Gesamtfüllstandes.

Fig. 4 verdeutlicht diese Problematik. Die vom Sensor 101 erfasste Echokurve 405 lässt eine sichere Trennung des von der Oberfläche 406 erzeugten Echos ($E_L$) 403 und des von der Trennschicht 407 erzeugten Echos ($E_I$) 404 nicht mehr zu, was zu starken Ungenauigkeiten im ermittelten Wert für die Distanz zur Trennschicht 401 führt.

Gänzlich unmöglich kann eine solche Messung nach dem Radarprinzip oder dem Prinzip der geführten Mikrowelle in einem konventionellen Behälter unter Umständen immer dann werden, wenn die Bildung einer Trennschicht unterbunden wird.

Fig. 5 zeigt eine entsprechende Anordnung. Im Behälter 501 befindet sich ein Rührwerk 502, welches die Emulsion 503 fortlaufend daran hindert, sich zu entmischen und eine Trennschicht auszubilden. Die vom Füllstandmessgerät 101 erfasste Echokurve 505 beinhaltet folglich nur ein Echo ($E_L$) 504, aus dessen Lage auf den Gesamtfüllstand $d_L$ 402 geschlossen werden kann. Eine Bestimmung der Massen- oder Volumenanteile der in der Emulsion 503 gemischten Bestandteile ist mit einem rein auf elektromagnetischen Wellen beruhenden Verfahren nicht möglich.

Emulsionen in Behältern können durch mehrere Sensoren oder eine Kombination von mehreren Messverfahren in einem Gerät vermessen werden. Hierfür ist oft ein erhöhter Aufwand an Geräten oder Bauteilen und eine umfangreiche Eingabe von Materialkennwerten notwendig.

Weiterhin können Trennschichten und/oder Emulsionen in speziell ausgebildeten Behältern vermessen werden.

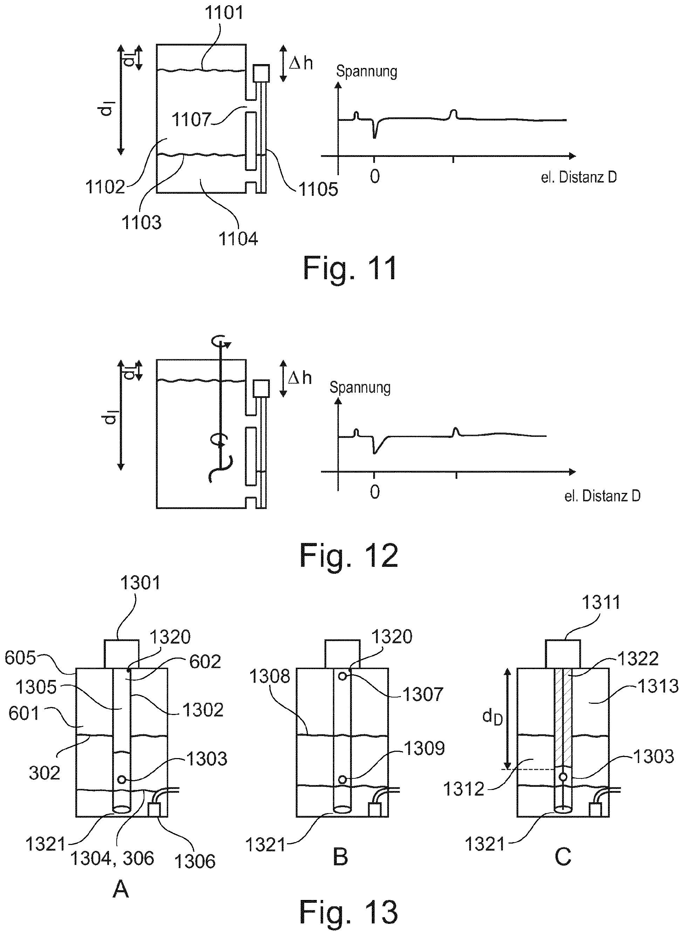

Fig. 11 zeigt eine entsprechende Anordnung mit einem Bypassrohr 1105. Die Messung ermöglicht die fortlaufende Bestimmung der Lage einer Trennschicht 1103 zwischen einem unteren Medium 1104 und einem oberen Medium 1102, sofern durch den Benutzer sichergestellt wird, dass die Lage des Gesamtfüllstandes 1101 immer oberhalb der oberen Verbindung 1107 liegt. Das Bypassrohr 1105 ist fortlaufend bis zum oberen Rand mit den beiden Medien befüllt. Eine simultane Bestimmung der Lage des Gesamtfüllstandes 1101 und der Lage der Trennschicht 1103 ist mit dieser Anordnung nicht möglich.

Fig. 12 zeigt die Verhältnisse einer Anordnung gemäß Fig. 11 bei Einsatz eines Rührwerks und Bildung einer Emulsion. Die Nachteile dieser Anordnung liegen in zusätzlichem Aufwand bei der Konstruktion des Behälters, dem Fehlen einer simultanen Bestimmung des Füllstandes und der Notwendigkeit, den Behälter im Bereich der oberen Verbindung 1107 immer mit dem oberen Medium 1102 befüllt halten zu müssen.

Im Folgenden werden weitere Ausführungsbeispiele der Erfindung beschrieben:

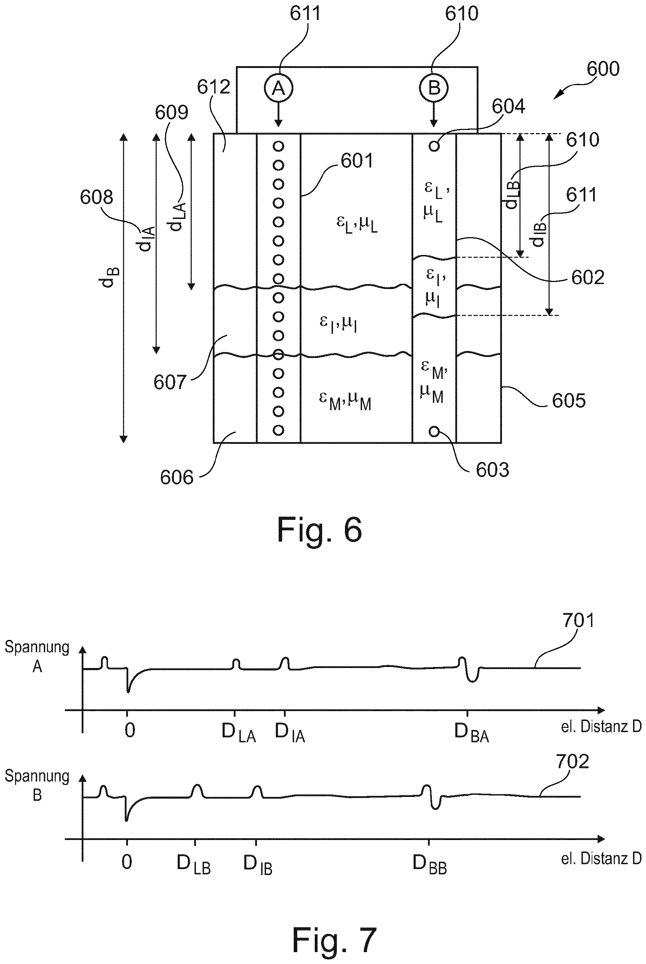

Fig. 6 zeigt eine Vorrichtung gemäß einem Ausführungsbeispiel der Erfindung. Die Vorrichtung weist einen ersten Koaxialleiter 601 auf, der vom Aufbau her identisch den bislang verwendeten Formen 104 ist. Darüber hinaus weist die Vorrichtung einen zweiten Koaxialleiter 602 auf, welcher sich von den bislang verwendeten Koaxialleitern zur Trennschichtmessung derart unterscheidet, dass er entlang seiner Längenausdehnung nur am unteren Ende 603 und am oberen Ende 604 eine Öffnung besitzt. Ansonsten ist das sich ergebende Standrohr 602, welches elektrisch gesehen als Koaxialleiter dient, geschlossen. Die beiden Koaxialleiter bilden die zwei Messkanäle A und B eines Messgerätes 600.

Wird der Behälter 605 mit zwei verschiedenen Medien 606, 607 befüllt, so ergeben sich durch die besondere Ausgestaltung des Standrohres B 602 verschiedene Pegel für die Lage der Trennschicht und des Gesamtfüllstandes. Im Behälter 605 und somit auch im Rohr 601 der Messung A ergibt sich für die physikalische Entfernung $d_{IA}$ 608 zur Trennschicht ein anderer Wert als für die physikalische Entfernung $d_{IB}$ zur sich ausbildenden Trennschicht im Rohr 602 der Messung B. Ebenso ergibt sich für die physikalische Entfernung $d_{LA}$ 609 zur Medienoberfläche im Behälter ein anderer Wert als für die physikalische Entfernung $d_{LB}$ zur sich bildenden Flüssigkeitsoberfläche im Rohr der Messung B. Die Zusammenhänge, welche die jeweiligen Pegel im Behälter und im Rohr der Messung A beschreiben, lassen sich unter der Annahme gleichen hydrostatischen Drucks am Behälterboden von einem Fachmann leicht herleiten.

Das erfindungsgemäße Füllstandmessgerät führt im Rahmen einer Einlernphase oder aber auch im Rahmen normaler Messzyklen nun gleichzeitig oder zeitlich aufeinander folgend zwei separate Messungen A und B durch. Die Reflektionen der Messung A, welche mit Hilfe des Koaxialleiters 601 durchgeführt wird, werden vom Füllstandmessgerät erfasst und in Form einer digitalisierten Echokurve 701 in einer Auswerteeinheit 110 weiter analysiert. Die Auswerteeinheit 110 bestimmt insbesondere die elektrische Distanz $D_{LA}$ zur Oberfläche des zu vermessenden Mediums, die elektrische Distanz $D_{IA}$ zur Trennschicht und falls aufgrund der Amplitudenverhältnisse möglich die elektrische Distanz $D_{BA}$ zum Bodenecho nach bekannten Verfahren. Weiterhin werden die Reflektionen der Messung B, welche mit Hilfe des Koaxialleiters 602 durchgeführt wird, vom Füllstandmessgerät erfasst und in Form einer weiteren digitalisierten Echokurve 702 in einer Auswerteeinheit 110 weiter analysiert. Die Auswerteeinheit 110 bestimmt wiederum die elektrische Distanz

$D_{LB}$ zur Oberfläche des zu vermessenden Mediums im Rohr B, die elektrische Distanz $D_{IB}$ zur Trennschicht im Rohr B und falls aufgrund der Amplitudenverhältnisse möglich die elektrische Distanz $D_{BB}$ zum Bodenecho im Rohr B nach bekannten Verfahren.

Auf Basis der ermittelten Werte kann auf die Medieneigenschaften des Trennschichtmediums folgendermaßen geschlossen werden:

$$\varepsilon_I \cdot \mu_I$$

$$= \left( \frac{(D_{BB} - D_{IB}) \cdot (D_{IA} - D_{LA}) - (D_{BA} - D_{IA}) \cdot (D_{IB} - D_{LB})}{(D_{BB} - D_{IB}) \cdot \left( d_B - \frac{1}{\sqrt{\varepsilon_L \cdot \mu_L}} \cdot D_{LA} \right) - (D_{BA} - D_{IA}) \cdot \left( d_B - \frac{1}{\sqrt{\varepsilon_L \cdot \mu_L}} \cdot D_{LB} \right)} \right)^2$$

Obiger Gleichung ist zu entnehmen, dass neben den aus der Messung A und Messung B ermittelten Kennwerten sowohl die Behälterhöhe $d_B$ als auch die Medieneigenschaften $\varepsilon_L * \mu_L$ der überlagerten Atmosphäre 612 eingehen. Die Behälterhöhe $d_B$ kann fest im Füllstandmessgerät 600 ab Werk abgespeichert werden, da diese aufgrund der gefertigten Länge der Koaxialleiter bekannt ist. Für die Medieneigenschaften $\varepsilon_L * \mu_L$ der überlagerten Atmosphäre 612 kann in einer Vielzahl praktischer Anwendungen ein Ersatzwert von 1 angesetzt werden, der einer Überlagerung mit Luft entspricht. Weicht das Überlagerungsmedium von dieser Annahme ab, so kommt zum einen eine Benutzereingabe oder aber auch eine automatische Ermittlung in Betracht.

Weiterhin ist es möglich, die Medieneigenschaften des unteren Mediums zu berechnen:

$$\varepsilon_M \cdot \mu_M = \left( \frac{D_{BB} - D_{IB}}{d_B - \frac{1}{\sqrt{\varepsilon_L \cdot \mu_L}} \cdot D_{LB} - \frac{1}{\sqrt{\varepsilon_I \cdot \mu_I}} (D_{IB} - D_{LB})} \right)^2$$

Dieser Kennwert kann insbesondere für die Vermessung von Bodenechos vorteilhaft verwendet werden, wird für den Kernaspekt der Erfindung aber nicht zwingend benötigt.

Die Bestimmung der Medieneigenschaften des Trennschichtmediums und/oder des unteren Mediums muss nur einmalig bei der Inbetriebnahme oder einem Medienwechsel erfolgen. Da zu diesen Zeitpunkten der Behälter 605 im Allgemeinen nur wenig befüllt ist, ergeben sich gute Chancen, die benötigten Kennwerte $D_{BA}$ und $D_{BB}$ anhand der Echokurven 701 und 702 messtechnisch ermitteln zu können, halten sich die dämpfenden Eigenschaften der Medien aufgrund der geringen Schichtstärken doch noch sehr in Grenzen. Alternativ mag es auch möglich sein, die Medieneigenschaften des Trennschichtmediums durch Benutzereingabe zu ermitteln.

Weiterhin ist es auf Basis der ermittelten Kennwerte möglich, das Verhältnis der Dichte $\rho_M$ des unteren Mediums 606 sowie der Dichte $\rho_I$ des oberen Mediums 607 automatisiert zu bestimmen:

$$\kappa = \frac{\rho_M}{\rho_I} = 1 - \frac{1}{1 + \sqrt{\frac{\varepsilon_L \cdot \mu_L}{\varepsilon_I \cdot \mu_I}} \cdot \left( \frac{D_{IA} - D_{IB}}{D_{LA} - D_{LB}} - 1 \right)}$$

Die ermittelten Werte für $\varepsilon_I * \mu_I$ sowie für $\kappa$ sind applikationsspezifische Konstanten, die einmalig vom Füllstandmessgerät bei der Inbetriebnahme berechnet werden, und die im Speicher des Füllstandmessgerätes abgelegt werden. Es mag auch möglich sein, die Werte fortlaufend zu ermitteln, um so die Messung automatisiert an sich verändernde Medien 606, 607 anpassen zu können. Es mag auch grundsätzlich möglich sein, die Werte für $\varepsilon_I * \mu_I$ sowie das Dichteverhältnis $\kappa$ vom Anwender eingeben zu lassen.

Auf Basis der ermittelten, applikationsspezifischen Konstanten kann nun ein normaler Messzyklus stattfinden.

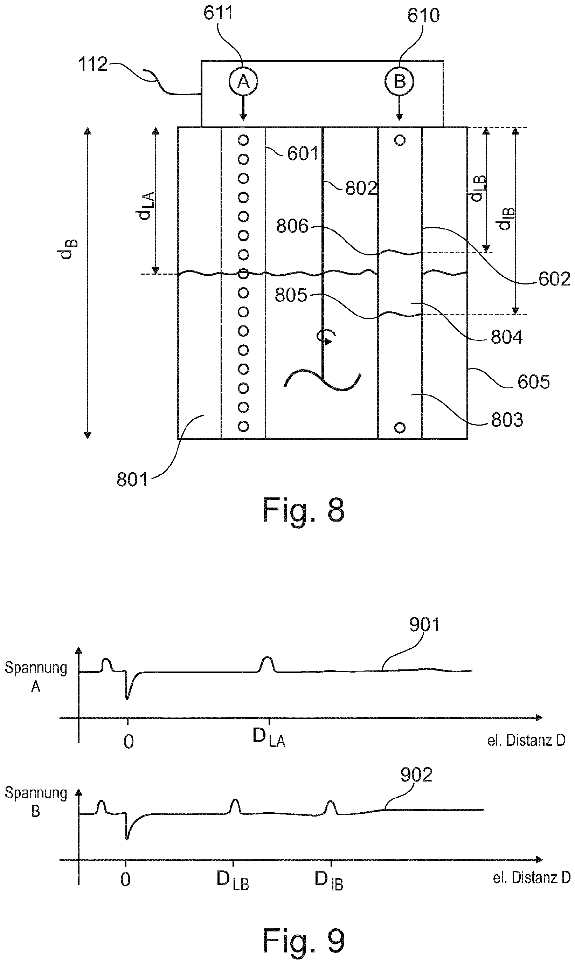

Fig. 8 zeigt eine Vorrichtung während der Vermessung einer Emulsion. Die sich aus dem unteren Medium 606 und dem oberen Medium 607 zusammensetzende Emulsion 801 wird durch den Betrieb eines Rührwerks 802 fortlaufend daran gehindert, sich zu entmischen und eine Trennschicht auszubilden. Im Standrohr der Messung B entmischen sich die Komponenten 803, 804 der Emulsion aufgrund der dort nicht vorhandenen Turbulenzen vollständig, und bilden eine saubere Trennschicht 805 sowie eine Flüssigkeitsoberfläche 806 aus, welche den Füllstand oder Gesamtfüllstand der Messung B lokalisiert.

Das erfindungsgemäße Füllstandmessgerät führt nun gleichzeitig oder zeitlich aufeinander folgend zwei separate Messungen A und B durch. Die Reflektionen der Messung A, welche mit Hilfe des Koaxialleiters 601 durchgeführt wird, werden vom Füllstandmessgerät erfasst und in Form einer digitalisierten Echokurve 901 in einer Auswerteeinheit 110 weiter analysiert. Die Auswerteeinheit 110 bestimmt insbesondere die elektrische Distanz $D_{LA}$ zur Oberfläche des zu vermessenden Mediums nach bekannten Verfahren. Die Bestimmung eines Trennschichtechos anhand der Echokurve 901 aus Messung A ist aufgrund der vorhandenen Emulsion nicht möglich. Weiterhin werden die Reflektionen der Messung B, welche mit Hilfe des Koaxialleiters 602 durchgeführt wird, vom Füllstandmessgerät erfasst und in Form einer weiteren digitalisierten Echokurve 702 in einer Auswerteeinheit 110 weiter analysiert. Die Auswerteeinheit 110 bestimmt wiederum die elektrische Distanz $D_{LB}$ zur Oberfläche des zu vermessenden Mediums im Rohr B sowie die elektrische Distanz $D_{IB}$ zur Trennschicht im Rohr B. Eine Erfassung des Bodenechos wird im Allgemeinen und speziell bei nahezu vollständig gefüllten Behältern aufgrund der Amplitudenverhältnisse nicht möglich sein, ist im Rahmen dieses Verfahrens aber auch nicht mehr notwendig.

Auf Basis der ermittelten Werte kann auf die Lage einer virtuellen Trennschicht im Behälter geschlossen werden, die sich nach vollständiger Entmischung der Emulsion bilden würde, und deren Lage sich nach folgender Gleichung ermitteln lässt:

$$d_{IA} = \frac{1}{\sqrt{\varepsilon_L \cdot \mu_L}} \cdot \left( \frac{D_{LA} - \kappa \cdot D_{LB}}{1 - \kappa} \right) + \frac{1}{\sqrt{\varepsilon_I \cdot \mu_I}} \cdot (D_{IB} - D_{LB})$$

Weiterhin können weitere Kennwerte, welche im Rahmen einer Trennschichtmessung und/oder Emulsionsmessung benötigt werden, errechnet werden. Beispiele hierzu wären der Pegel des unteren Mediums, die prozentuale Zusammensetzung der im Behälter befindlichen Emulsion, die Verteilung der Medienanteile im Behälter, die Verteilung der Massenanteile im Behälter (unter Verwendung von $\kappa$) oder weitere mehr.

Das Verfahren eignet sich daneben auch zur Verbesserung einer klassischen Trennschichtmessung. Liegen in einem Behälter Befüllungsverhältnisse derart vor, dass sich nur ein kleiner Abstand zwischen Trennschicht und Flüssigkeitsoberfläche ergibt (vgl. Fig. 4), so kann bei Verwendung einer erfindungsgemäßen Vorrichtung eine deutliche Verbesserung der Genauigkeit bei der Bestimmung der Lage der Trennschicht erreicht werden, da das zugehörige Echo für die Auswertung nicht benötigt wird. Weiterhin bietet die vorliegende Erfindung den Vorteil, auch eine teilweise Entmischung einer Emulsion korrekt vermessen zu können.

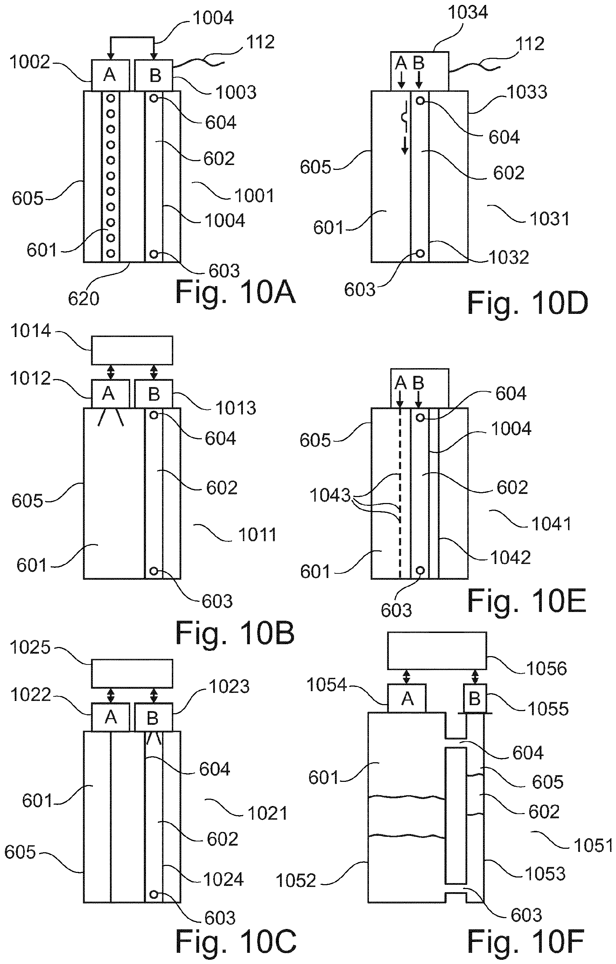

Die Figuren 10A bis 10I zeigen weitere Ausführungsbeispiele der Erfindung. Charakteristisch und notwendig ist immer das Vorhandensein eines vom Behälter abgetrennten Raumbereiches oder zumindest eines Teilbereichs, in welchem sich eine Trennschichtecholage ergibt, die sich von derjenigen im Behälter selbst unterscheidet.

Ausführungsbeispiel 1001 (Fig. 10A) realisiert das erfindungsgemäße Verfahren durch die Kombination eines Füllstandmessgerätes nach dem Prinzip der geführten Mikrowelle 1002, welches seine Ergebnisse aus der Vermessung der Sonde A über eine Kommunikationsleitung 1004 an ein zweites Messgerät 1003 weiterleitet. Dieses ist ausgeführt, neben der Vermessung der Messsonde B 1004 die rechnerische Verknüpfung der ermittelten Kennwerte zu realisieren, und die Ergebnisse nach außen hin bereitzustellen.

Ausführungsbeispiel 1011 (Fig. 10B) besteht aus einem konventionellen Radar-Füllstandmessgerät 1012, welches die Ergebnisse einer Messung A ermittelt, einem erfindungsgemäßen Füllstandmessgerät 1013 nach dem Prinzip der geführten Mikrowelle, welches die Ergebnisse einer Messung B ermittelt sowie einer übergeordneten Steuerungs- und Auswerteeinheit 1014, welche die in Messung A und Messung B ermittelten Kennwerte erfindungsgemäß auswertet und nach außen hin bereitstellt.

Ausführungsbeispiel 1021 (Fig. 10C) zeigt eine weitere Variante. Hierbei wird Messung A mit Hilfe eines Füllstandmessgeräts 1022 nach dem Prinzip der geführten Mikrowelle, und Messung B mit Hilfe eines konventionellen Radargerätes 1023, welches die Lage der Füllgutoberfläche sowie die Lage einer Trennschicht in einem erfindungsgemäßen Standrohr 1024 erfasst, realisiert. Die übergeordnete Steuerungs- und Auswerteeinheit 1025 wertet die Ergebnisse der beiden Messungen wiederum aus und stellt sie nach außen hin bereit.

Ausführungsbeispiel 1031 (Fig. 10D) zeigt eine weitere Variante. Das erfindungsgemäße Koaxial-Standrohr 1032 dient im Inneren zur Erfassung der Kennwerte einer Messung B, und wird weiterhin als Stabsonde genutzt, auf deren äußere Oberfläche eine Messung A nach dem Prinzip der geführten Mikrowelle durchgeführt werden kann. Vorteilhaft an dieser Ausgestaltung ist insbesondere, dass nur eine Prozessöffnung im Behälter 1033 vom erfindungsgemäßen Füllstandmessgerät 1034 genutzt wird.

Die Messsonde des Ausführungsbeispiels 1041 (Fig. 10E) besteht im Inneren aus einem erfindungsgemäßen Koaxialstandrohr (vergleichbar mit Bezugszeichen 1004), in welchem Messung B ausgeführt wird. Weiterhin ist diese Sonde gemäß der Anmeldung: "Vorrichtung zur doppelten Füllstandmessung nach einem Laufzeitverfahren" durch ein äußeres Ummantelungsrohr 1042, welches in regelmäßigen Abständen Bohrungen 1043 aufweist, zu einer Doppelkoaxialsonde ergänzt. Messung A erfolgt hierbei im äußeren Koaxialleiter, welcher als Innenleiter das Standrohr 1004 benutzt.

In vielen Behältern der chemischen Industrie werden separat angeordnete Bypassrohre zur Ermittlung des Füllstandes verwendet. Ausführungsbeispiel 1051 (Fig. 10F) zeigt eine solche Anordnung. Der eigentliche Behälter 1052 besitzt ein parallel angeordnetes Bypassrohr 1053, das an seinem oberen Ende und in der Nähe des Behälterbodens Verbindungen (603,604) zum Behälter aufweist. Die so vorhandene Anordnung kann beispielsweise mit zwei Radar-Füllstandmessgeräten 1054, 1055, welche die Messungen A und B ausführen, sowie einer übergeordneten Steuerungs- und Auswerteeinheit 1056 derart ergänzt werden, dass eine erfindungsgemäße Vorrichtung zur Vermessung von Trennschichten und/oder Emulsionen entsteht.

Allen oben dargestellten Ausführungsbeispielen ist gemein, dass sie nur beispielhafte Anordnungen zeigen. Es mag stets möglich sein, die verwendeten Messgeräte A und B nach verschiedenartigen Prinzipien auszuführen. Weiterhin mag es möglich sein, eine separate Auswerteeinheit oder eine Auswerteeinheit, welche sich in zumindest einem der beiden Geräte A und B befindet, zu verwenden. Zudem mag es immer möglich sein, zwei Sonden oder zwei Messverfahren in einem einzigen Gerät zu kombinieren.

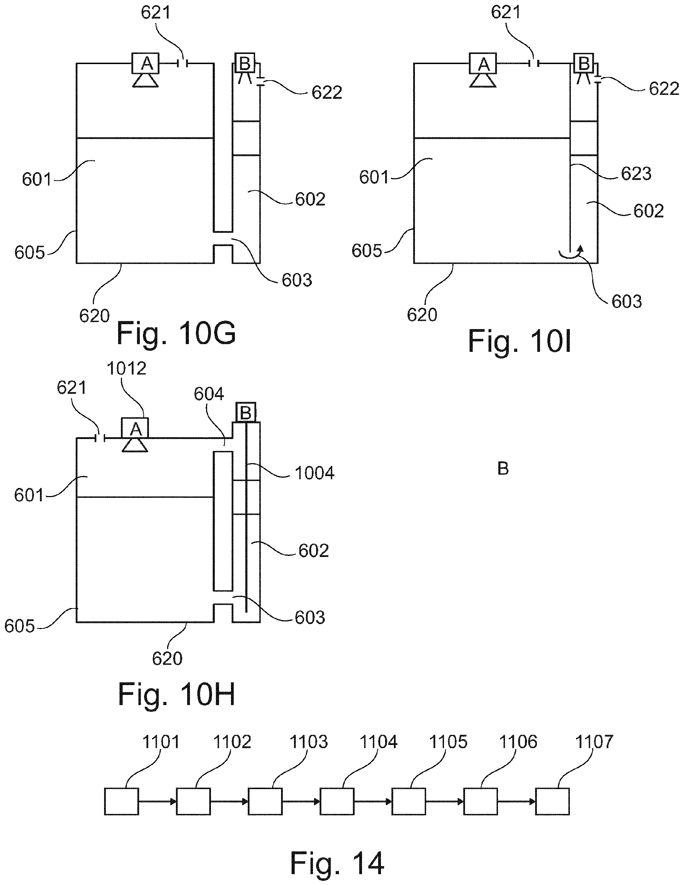

Im Ausführungsbeispiel der Fig. 10G sind der erste Teilbereich 602 und der zweite Teilbereich 601 lediglich durch eine in der Nähe des Behälterbodens 620 angeordnete Verbindung 603 miteinander verbunden. Die beiden Teilbereiche 601, 602 weisen zum Druckausgleich beispielsweise Ventile 621, 622 auf, die oben am Behälter angeordnet sind.

Beim Ausführungsbeispiel der Fig. 10H sind die beiden Teilbereiche sowohl über eine untere Verbindung 603 als auch über eine obere Verbindung 604 miteinander verbunden und der zweite Teilbereich 601 (nicht aber der erste Teilbereich 602) weist ein Ventil 621 zum Druckausgleich auf.

Im Ausführungsbeispiel der Fig. 10I sind die beiden Teilbereiche 601, 602 über eine untere Verbindung 603 miteinander verbunden. Der erste Teilbereich 602 ist nicht als Standrohr ausgebildet. Vielmehr ist der erste Teilbereich vom zweiten Teilbereich durch eine ebene Trennwand 623 abgetrennt. Zur Füllstandmessung im ersten Teilbereich 602 kann ebenfalls ein Füllstandradar vorgesehen sein.

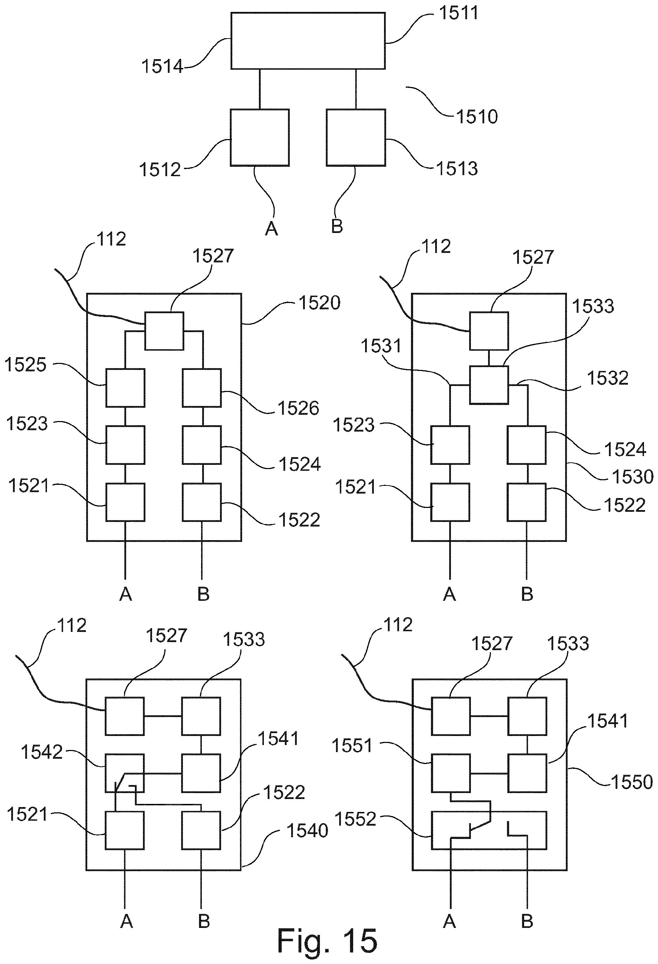

Weiterhin sei auf die Vielfalt möglicher schaltungstechnischer Ausgestaltungen der Messelektronik der Vorrichtung zur Emulsions-, Trennschicht- oder Füllstandmessung verwiesen. Beispiele hierfür sind in der Fig. 15 gezeigt. Im Gegensatz zu den vorab vorgestellten Varianten verschiedener Sonden werden hier einige mögliche Ausgestaltungen einer entsprechenden Geräteelektronik vorgestellt. Es ist zu beachten, dass die Sondenanschlüsse der bislang vorgestellten Sonden in den Darstellungen der Fig. 15 durch die Buchstaben A und B abstrahiert sind.

Es ist möglich, eine erfindungsgemäße Vorrichtung durch die Kombination zweier kompletter Elektronikeinsätze 1512, 1513 konventioneller Füllstandmessgeräte 101 zu implementieren. Die Elektronikeinsätze mögen nach verschiedenen Prinzipien arbeiten, passend zur Ausgestaltung der verwendeten Sondeneinkopplungen an den Anschlüssen A und B. Eine übergeordnete Auswerteeinheit 1511 verrechnet die von den Elektronikeinsätzen 1512, 1513 bereitgestellten, einzelnen Werte für die Lage des Füllstands und/oder die Lage der Trennschicht (aus Messung A und B) und bildet daraus zumindest einen Messwert, der an einer externen Schnittstelle 1514 bereitgestellt wird.

Die Darstellung 1520 zeigt den Aufbau einer weiteren Elektronikvariante. Die Funktionalität dieser Variante entspricht der aus Darstellung 1510, wobei die Hochfrequenzerzeugungseinheit 1521, die Analog-Digital-Wandlereinheit 1523 und die Auswerteeinheit 1525 in Kombination in der Lage sind, eine erste Messung durchzuführen, und weiterhin die Hochfrequenzerzeugungseinheit 1522, die Analog-Digital-Wandlereinheit 1524 und die Auswerteeinheit 1526 in Kombination in der Lage sind, eine zweite Messung durchzuführen. Die aus den Messungen ermittelten Messwerte werden durch eine geeignete Programmlogik in der Ausgabeeinheit 1527 miteinander verrechnet und nach außen hin bereitgestellt. Es sei darauf hingewiesen, dass in dieser Struktur Messung B auch nach einem alternativen Messprinzip realisiert werden kann. Die Hochfrequenzeinheit 1522 muss dann durch eine passende Einheit (Lasererzeugungseinheit, Ultraschallerzeugungseinheit) ersetzt werden.

Eine weitere Realisierungsvariante gemäß Darstellung 1530 entspricht derjenigen aus Darstellung 1520, nutzt für die Auswertung der digitalisierten Echokurven, welche an den Anschlüssen 1531 und 1532 bereitgestellt werden, aber eine gemeinsame Auswerteeinheit 1533.

Weiterhin mag es auch möglich sein, die Überführung der Signale in eine digitale Darstellung mit einer einzigen Analog-Digital-Wandlereinheit gemäß Anordnung 1540 durchzuführen. Neben der Analog-Digital-Wandlereinheit 1541 weist die Vorrichtung hierzu einen Analogschalter 1542 auf, welcher die analogen, niederfrequenten Signale in einem Zeitmultiplex an die Analog-Digital-Wandlereinheit 1541 weiterleitet.

Die Anordnung 1550 nutzt darüber hinaus vorteilhaft die vorhandene Struktur einer vorhandenen Hochfrequenzeinheit 1551 eines Sensors, und ergänzt diese um einen Hochfrequenzumschalter 1552. Durch diese Variante lässt sich ein besonders einfacher Aufbau einer Vorrichtung gemäß der vorliegenden Erfindung erreichen.

Weiterhin ist es in vielen Behältern der petrochemischen Industrie erwünscht, ausschließlich die Lage einer Trennschicht zu erfassen. Beispiele hierzu sind Mineralölbevorratungsbehälter, in denen eine sich am Boden absetzende WasserKondensat-Schicht überwacht werden soll.

Fig. 13 zeigt drei erfindungsgemäße Vorrichtungen zur Trennschicht- und/oder Emulsionsmessung in Teilbereichen eines Behälters.

Die Anordnung gemäß Darstellung (A) der Fig. 13 zeigt ein Füllstandmessgerät nach einem Laufzeitverfahren 1301, dessen Wellenleiter 1302 nach unten hin geöffnet ist, und zudem eine Bohrung 1303 im unteren Bereich des Wellenleiters aufweist. Der Wellenleiter kann je nach Art des Füllstandmessgerätes als Hohlleiter oder auch als Koaxialleiter ausgestaltet sein. Die Anordnung ermöglicht die Erfassung einer Trennschicht 1304 innerhalb des Wellenleiters, wobei das Niveau dieser Trennschicht innerhalb und außerhalb des Wellenleiters identisch ist. Zudem strömt durch die Bohrung 1303 das obere Medium in den Wellenleiter, steigt darin aber nicht bis auf das Niveau außerhalb des Wellenleiters an, da der Wellenleiter nach oben hin geschlossen ist, und die darin befindliche Atmosphäre 1305 durch die aufsteigende Flüssigkeit komprimiert wird und einen Gegendruck aufbaut. Es mag möglich sein, am oberen Ende des Wellenleiters diesen Druck mit Hilfe eines Drucksensors, welcher oberhalb des Füllmediums im ersten Bereich angeordnet ist, zu erfassen, und hieraus auf das Niveau des Füllstandes zu schließen. Die zuvor beschriebenen Werte lassen sich auch während der Bildung einer Emulsion zuverlässig erfassen, und können beispielsweise dazu verwendet werden, eine Kondensatpumpe 1306 anzusteuern.

Die Anordnung gemäß Darstellung (B) der Fig. 13 entspricht der Anordnung aus der Darstellung (A), weist darüber hinaus am oberen Ende des Wellenleiters eine weitere Bohrung 1307 auf, welche sicherstellt, dass das Niveau 1308 des Gesamtfüllstandes im Wellenleiter gleich ist dem Niveau außerhalb des Wellenleiters. Die Anordnung ähnelt der Anordnung aus Fig. 3, nutzt aber den Sachverhalt aus, dass die Trennschicht nur im unteren Bereich vermessen werden soll, weshalb eine einzige Bohrung 1309 für den Niveauausgleich der Trennschicht und des Mediums in- und außerhalb des Wellenleiters ausreicht. Eine Vielzahl von Bohrungen entlang des Wellenleiters ist nicht erforderlich, was zu erheblich besseren Reflexionsverhältnissen innerhalb des Wellenleiters beitragen kann. Die Bohrungen verursachen im Allgemeinen beträchtliche Störungen im empfangenen Signal.

Die Anordnung gemäß Darstellung (C) der Fig. 13 spezialisiert vollends auf die Vermessung einer Trennschicht im unteren Bereich des Wellenleiters. Da Reflektionen bis zu einer Entfernung $d_D$ nicht von Interesse sind (ausschließliche Bestimmung der Trennschicht im unteren Bereich des Behälters), wird der Wellenleiter 1310 derart ausgeführt, dass ein Eindringen von Flüssigkeit in den Innenraum des Wellenleiters im Bereich zwischen Füllstandmessgerät und einer Entfernung $d_D$ nicht stattfinden kann. Die Sonde kann hierzu mit einem Dielektrikum gefüllt sein, oder auch eine Abdichtung aufweisen. Großer Vorteil dieser Anordnung ist, dass das zur Messung verwendete Signal des Füllstandmessgerätes 1311 entlang der Ausbreitung bis zu einer Entfernung $d_D$ nicht durch das obere Medium 1312 oder die Überlagerungsatmosphäre 1313 gedämpft oder in seiner Ausbreitung beeinflusst werden kann.

Fig. 13 zeigt demnach Messvorrichtungen, insbesondere Füllstand-, Trennschicht- oder Emulsionsmessvorrichtungen, die nach einem Laufzeitverfahren arbeiten. Die Vorrichtungen weisen einen Behälter 605 zur Aufnahme einer ersten Flüssigkeit 606 und/oder einer zweiten Flüssigkeit 607 mit geringerer Dichte als die erste Flüssigkeit auf. Der Behälter weist einen ersten Teilbereich 602, einen zweiten Teilbereich 601 und zumindest zwei Verbindungen 1303, 1321 zwischen den beiden Teilbereichen 601, 602 zum Austausch von Flüssigkeit zwischen den beiden Teilbereichen 601, 602 auf (siehe hierzu auch Fig. 6).

Der erste Teilbereich ist 602 durch einen Wellenleiter, der zumindest teilweise in dem Behälter 605 angeordnet ist, ausgebildet, wobei der Wellenleiter in einem oberen Bereich 1305 geschlossen ist, so dass eine Befüllung des zweiten Teilbereichs 601 mit Flüssigkeit 606, 607 zu einem Anstieg des Drucks in dem oberen Bereich führt.

Weiterhin ist eine Messvorrichtung, insbesondere eine Füllstand- bzw. Trennschichtmessvorrichtung 1301, 1311 zur Erfassung einer Echokurve, welche die Reflexionsverhältnisse innerhalb des Wellenleiters abbildet, vorgesehen.

Die Auswerteeinheit, welche in der Messvorrichtung enthalten ist, (nicht dargestellt) ist ausgebildet, zumindest einen Kennwert für die Lage des Füllstandes und/oder einer tatsächlich vorhandenen oder virtuellen Trennschicht zwischen den zwei verschiedenen Flüssigkeiten des Füllmediums im zweiten Teilbereich 601 zu bestimmen, wobei die Auswerteeinheit hierfür die Echokurve verwendet.

Gemäß einem weiteren Ausführungsbeispiel weist die Messvorrichtung weiterhin zumindest ein Druckmessgerät oder eine Druckmesseinrichtung 1320 im oberen Bereich 1305 auf, wobei die Auswerteeinheit, welche in der Messvorrichtung enthalten ist, zur Bestimmung zumindest eines Kennwertes für die Lage des Gesamtfüllstands und/oder die Lage einer tatsächlich vorhandenen oder virtuellen Trennschicht zwischen der ersten und der zweiten Flüssigkeit im zweiten Teilbereich 601 mit Hilfe des Drucks im oberen Bereich 1305 ausgeführt ist.

Gemäß einem weiteren Ausführungsbeispiel ist der Wellenleiter 602 ein Hohlleiter.

Gemäß einem weiteren Ausführungsbeispiel ist der Wellenleiter 602 ein Koaxialwellenleiter.

Gemäß einem weiteren Ausführungsbeispiel handelt es sich bei der Messvorrichtung 1301, 1311 um eine Messvorrichtung, welche ein elektromagnetisches Sendesignal oder ein akustisches Sendesignal aussendet.

Gemäß einem weiteren Ausführungsbeispiel ist die Messvorrichtung eine Vorrichtung 1301, 1311, die nach dem Prinzip der geführten Mikrowellen arbeitet, und einen Innenleiter 104 (siehe Fig. 1) aufweist, der innerhalb des ersten Teilbereichs 602 angeordnet ist, wobei der Innenleiter 104 und eine Wandung es ersten Teilbereiches 602 einen Koaxialleiter ausbilden, so dass der Füllstand innerhalb des ersten Teilbereichs 602 mit Hilfe des aus dem Innenleiter und der Wandung des ersten Teilbereichs ausgebildeten Koaxialleiters ermittelt wird.

Gemäß einem weiteren Ausführungsbeispiel weist die Messvorrichtung weiterhin ein Dielektrikum 1322 oder eine Abdichtung im oberen Bereich 1305 auf, welches bzw. welche ein Eindringen der ersten und/oder der zweiten Flüssigkeit in den zweiten Bereich verhindert.

Weiterhin ist ein Verfahren zur Emulsionsmessung angegeben, das Verfahren aufweisend die folgenden Schritte:

- Einfüllen einer ersten Flüssigkeit 606 und/oder einer zweiten Flüssigkeit 607 mit geringerer Dichte als die erste Flüssigkeit in einen zweiten Teilbereich eines Behälters 605, der einen ersten Teilbereich 602, einen zweiten Teilbereich 601 und zumindest zwei Verbindungen 1303, 1321 zwischen den beiden Teilbereichen 601, 602 zum Austausch von Flüssigkeit zwischen den beiden Teilbereichen 601, 602 aufweist;

wobei der erste Teilbereich 602 durch einen Wellenleiter, der zumindest teilweise in dem Behälter 605 angeordnet ist, ausgebildet ist;

- Ansteigen des Drucks in einem oberen Bereich 1305 des Wellenleiters 602, da der Wellenleiter 602 in dem oberen Bereich 1305 geschlossen ist;
- Erfassung einer Echokurve, welche die Reflexionsverhältnisse innerhalb des Wellenleiters 602 abbildet;
- Bestimmen eines Kennwerts für die Lage des Füllstandes und/oder einer tatsächlich vorhandenen oder virtuellen Trennschicht zwischen den zwei verschiedenen Flüssigkeiten des Füllmediums im zweiten Teilbereich 601 unter Verwendung der Echokurve.

Weiterhin können die folgenden Schritte vorgesehen sein:

Bestimmen des Drucks im oberen Bereich (1305) des Wellenleiters;
Bestimmen zumindest eines Kennwertes für den Gesamtfüllstand der ersten und/oder der zweiten Flüssigkeit im zweiten Teilbereich (601) mit Hilfe des Drucks im oberen Bereich (1305).

Fig. 14 zeigt ein Flussdiagramm eines Verfahrens gemäß einem Ausführungsbeispiel der Erfindung. In Schritt 1401 erfolgt die Bestimmung des Gesamtfüllstands sowie die Bestimmung der Lage der Trennschicht zwischen den beiden Flüssigkeiten, die sich in dem Behälter befinden, im ersten Teilbereich des Behälters.

In Schritt 1402 erfolgt die Bestimmung des Gesamtfüllstands sowie die Bestimmung der Lage der Trennschicht zwischen den beiden Flüssigkeiten, die sich in dem Behälter befinden, im zweiten Teilbereich des Behälters. In Schritt 1403 wird das Verhältnis der Dichten der beiden Flüssigkeiten berechnet. In Schritt 1404 werden die Flüssigkeiten im zweiten Teilbereich des Behälters verrührt, so dass sich eine Emulsion ausbildet und in Schritt 1405 erfolgt die Zugabe einer weiteren Menge an Flüssigkeit in den zweiten Teilbereich des Behälters. In Schritt 1406 findet wiederum die Erfassung und Auswertung einer Echokurve jeweils im ersten Teilbereich und im zweiten Teilbereich statt. Aus den so gewonnenen zwei Messwerten des ersten Teilbereichs und dem einen Messwert (Gesamtfüllstand) des zweiten Teilbereichs des Behälters wird nun in Schritt 1407 unter Kenntnis des Dichteverhältnisses der beiden Flüssigkeiten die Lage der virtuellen Trennschicht oder des Mischungsverhältnisses berechnet. Wichtig hierbei ist, dass sich die beiden Gesamtfüllstände auf unterschiedlichem Niveau befinden.

Ergänzend sei daraufhingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Messvorrichtung (600), die nach einem Radarprinzip und/oder einem Verfahren nach dem Prinzip der geführten Mikrowelle arbeitet, die Vorrichtung aufweisend:

   einen Behälter (605) zur Aufnahme einer ersten Flüssigkeit und einer zweiten Flüssigkeit mit geringerer Dichte als die erste Flüssigkeit, und mit einem ersten Teilbereich (602), einem zweiten Teilbereich (601) und einer oder mehrere Verbindungen (603, 604) zwischen den beiden Teilbereichen (601, 602) zum Austausch von Flüssigkeit zwischen den beiden Teilbereichen (601, 602);
eine erste Messeinrichtung (610) zur Erfassung einer ersten Echokurve, welche die Reflexionsverhältnisse innerhalb des ersten Teilbereichs (602) abbildet;
eine zweite Messeinrichtung (611) zur Erfassung zumindest einer zweiten Echokurve, welche die Reflexionsverhältnisse innerhalb des zweiten Teilbereichs (601) abbildet;
eine Auswerteeinheit (110);
wobei die Auswerteeinheit (110) zum Ermitteln einer ersten elektrischen Distanz zur Oberfläche der zweiten Flüssigkeit im ersten Teilbereich unter Verwendung der ersten Echokurve ausgeführt ist;
wobei die Auswerteeinheit (110) zum Ermitteln einer zweiten elektrischen Distanz zu einer Trennschicht zwischen den beiden Flüssigkeiten im ersten Teilbereich unter Verwendung der ersten Echokurve ausgeführt ist;
wobei die Auswerteeinheit (110) zum Ermitteln einer dritten elektrischen Distanz zur Oberfläche der zweiten Flüssigkeit im zweiten Teilbereich unter Verwendung der zweiten Echokurve ausgeführt ist, wobei die erste elektrische Distanz ungleich der dritten elektrischen Distanz ist;
wobei die Auswerteeinheit (110) ausgebildet ist, zumindest einen Kennwert für die Lage einer tatsächlich vorhandenen oder virtuellen Trennschicht zwischen zwei verschiedenen Flüssigkeiten im zweiten Teilbereich (601) zu bestimmen oder zumindest einen Kennwert für die Zusammensetzung des Gemisches aus den zwei verschiedenen Flüssigkeiten zu bestimmen;
wobei die Auswerteeinheit (110) für die Bestimmung der Lage der tatsächlich vorhandenen oder virtuellen Trennschicht im zweiten Teilbereich oder für die Bestimmung des Kennwerts für die Zusammensetzung des Gemisches aus den zwei verschiedenen Flüssigkeiten die erste, die zweite und die dritte elektrische Distanz sowie das Dichteverhältnis der beiden Flüssigkeiten verwendet;
wobei der erste Teilbereich (602) und die Verbindungen (603, 604) zwischen den beiden Teilbereichen (601, 602) derart ausgeführt sind, dass bei Zugabe einer Menge an Flüssigkeit in den zweiten Teilbereich (601) das Niveau einer sich im ersten Teilbereich (602) bildenden Flüssigkeitssäule ungleich ist dem Niveau einer Flüssigkeitssäule im zweiten Teilbereich (601).

2. Messvorrichtung nach Anspruch 1,
wobei der erste Teilbereich (602) des Behälters (605) durch den Innenraum eines Standrohres ausgebildet ist.

3. Messvorrichtung nach Anspruch 1,
wobei der erste Teilbereich (602) des Behälters (605) durch ein Bypassrohr des Behälters ausgebildet ist.

4. Messvorrichtung nach einem der vorhergehenden Ansprüche,
wobei die Verbindung (603, 604) zwischen den beiden Teilbereichen (601, 602) durch eine erste Öffnung (603) im ersten Teilbereich (602) des Behälters (605), welche sich in Nähe des Behälterbodens (620) befindet, und durch eine zweite Öffnung (604) im ersten Teilbereich (602) des Behälters (605), welche sich bei ordnungsgemäß befülltem Behälter (605) oberhalb der beiden Flüssigkeiten befindet, ausgebildet ist.

5. Messvorrichtung nach einem der vorhergehenden Ansprüche,
wobei die erste Messeinrichtung (610) und die zweite Messeinrichtung (611) identische Einrichtungen sind.

6. Messvorrichtung nach einem der vorhergehenden Ansprüche,
wobei es sich bei der ersten und/oder der zweiten Messeinrichtung (611) um eine Messeinrichtung handelt, welche ein elektromagnetisches Sendesignal oder ein akustisches Sendesignal aussendet.

7. Messvorrichtung nach einem der vorhergehenden Ansprüche,

wobei die erste Messeinrichtung (610) nach dem Prinzip der geführten Mikrowellen arbeitet und einen Innenleiter (104) aufweist, der innerhalb des ersten Teilbereichs (602) angeordnet ist;
wobei der Innenleiter (104) und eine Wandung des ersten Teilbereiches (602) einen Koaxialleiter ausbilden, so dass die Echokurve innerhalb des ersten Teilbereichs (602) mit Hilfe des aus dem Innenleiter und der Wandung des ersten Teilbereichs ausgebildeten Koaxialleiters ermittelt wird.

8. Messvorrichtung nach einem der vorhergehenden Ansprüche,
weiterhin ausgeführt zur Erfassung und Ausgabe zumindest eines Kennwertes für den Füllstand im zweiten Teilbereich (601).

9. Messvorrichtung nach einem der vorhergehenden Ansprüche,

wobei die Bestimmung des zumindest einen Kennwerts für die Lage einer tatsächlich vorhandenen oder virtuellen Trennschicht zwischen zwei verschiedenen Flüssigkeiten im zweiten Bereich (601) oder des zumindest einen Kennwerts für die Zusammensetzung des Gemisches aus den zwei verschiedenen Flüssigkeiten ohne Zuhilfenahme einer kapazitiven Messung erfolgt.

10. Verfahren zur Emulsionsmessung und/oder Trennschichtmessung nach einem Radarprinzip und/oder nach dem Prinzip der geführten Mikrowelle, das Verfahren aufweisend die folgenden Schritte:

> Bestimmen zumindest eines Kennwertes für den Füllstand von zwei verschiedenen Flüssigkeiten und Bestimmen zumindest eines Kennwertes für die Lage einer Trennschicht zwischen den beiden Flüssigkeiten in einem ersten Teilbereich eines Behälters;
> Bestimmen zumindest eines Kennwertes für den Füllstand der beiden Flüssigkeiten in einem zweiten Teilbereich des Behälters;
> Berechnen zumindest eines Kennwertes für die Lage einer tatsächlich vorhandenen oder virtuellen Trennschicht zwischen den beiden Flüssigkeiten in dem zweiten Teilbereich des Behälters unter Verwendung der in den ersten zwei Schritten gewonnenen Kennwerte sowie dem Dichteverhältnis der beiden Flüssigkeiten.

11. Verfahren nach Anspruch 10, weiterhin aufweisend den Schritt:
Bestimmen des Dichteverhältnisses der beiden Flüssigkeiten anhand einer Messung, bei welcher der zumindest ein Kennwert für den Füllstand der zwei verschiedenen Flüssigkeiten und zumindest ein Kennwert für die Lage der Trennschicht zwischen den beiden Flüssigkeiten in dem ersten und dem zweiten Teilbereich des Behälters bestimmt wird.

12. Verfahren nach Anspruch 10 oder 11,
wobei das Verfahren von einer Messvorrichtung (600) nach einem der Ansprüche 1 bis 10 durchgeführt wird.

13. Verfahren nach Anspruch 11 oder 12, weiterhin aufweisend den Schritt:
Vermischen der beiden Flüssigkeiten in dem zweiten Teilbereich, nachdem das Dichteverhältnis bestimmt wurde und bevor die ersten zwei Schritte durchgeführt werden.

14. Verwendung einer Messvorrichtung (600) nach einem der Ansprüche 1 bis 9 zur Durchführung des Verfahrens nach einem der Ansprüche 10 bis 13.

**Claims**

1. A measuring device (600) that operates according to a radar principle and/or according to the principle of the guided microwave, the device comprising:

> a container (605) for holding a first liquid and a second liquid of lower density than the first liquid, and comprising a first sub-region (602), a second sub-region (601) and one or several connections (603, 604) between the two sub-regions (601, 602) for exchanging liquid between the two sub-regions (601, 602);
> a first measuring apparatus (610) for acquiring a first echo curve that illustrates the reflection conditions within the first sub-region (602);
> a second measuring apparatus (611) for acquiring at least one second echo curve that illustrates the reflection conditions within the second sub-region (601);
> an evaluation unit (110);
> wherein the evaluation unit (110) is designed for determining a first electrical distance to the surface of the second liquid in the first sub-region with the use of the first echo curve;
> wherein the evaluation unit (110) is designed for determining a second electrical distance to a separating layer between the two liquids in the first sub-region with the use of the first echo curve;
> wherein the evaluation unit (110) is designed for determining a third electrical distance to the surface of the second liquid in the second sub-region with the use of the second echo curve, wherein the first electrical distance differs from the third electrical distance;
> wherein the evaluation unit (110) is designed for determining at least one characteristic value relating to the position of an actually existing or a virtual separating layer between two different liquids in the second sub-region (601), or for determining at least one characteristic value relating to the composition of the mixture comprising the two different liquids;

wherein the evaluation unit (110) is designed for determining the position of an actually existing or a virtual separating layer in the second sub-region, or for determining the characteristic value relating to the composition of the mixture comprising the two different liquids, which uses the first, the second and the third electrical distance and the density ratio of the two liquids;

wherein the first sub-region (602) and the connections (603, 604) between the two sub-regions (601, 602) are designed in such a manner that, when a defined quantity of liquid is added in the second sub-region (601), the level of a liquid column forming in the first sub-region (602) differs from the level of a liquid column in the second sub-region (601).

2.  The measuring device according to claim 1,
    wherein the first sub-region (602) of the container (605) is formed by the interior space of a standpipe.

3.  The measuring device according to claim 1,
    wherein the first sub-region (602) of the container (605) is formed by a bypass pipe of the container.

4.  The measuring device according to any one of the preceding claims,
    wherein the connection (603, 604) between the two sub-regions (601, 602) is formed by a first opening (603) in the first sub-region (602) of the container (605), which opening (603) is situated near the container bottom (620), and by a second opening (604) in the first sub-region (602) of the container (605), which opening (604) in the case of a properly filled container (605) is situated above the two liquids.

5.  The measuring device according to any one of the preceding claims,
    wherein the first measuring apparatus (610) and the second measuring apparatus (611) are identical apparatuses.

6.  The measuring device according to any one of the preceding claims,
    wherein the first and/or the second measuring apparatus (611) is a measuring apparatus that emits an electromagnetic transmission signal or an acoustic transmission signal.

7.  The measuring device according to any one of the preceding claims,

    wherein the first measuring apparatus (610) operates according to the principle of the guided microwave and comprises an inner guide (104) arranged within the first sub-region (602);
    wherein the inner guide (104) and a wall of the first sub-region (602) form a coaxial guide so that the echo curve within the first sub-region (602) is determined by means of the coaxial guide formed by the inner guide and the wall of the first sub-region.

8.  The measuring device according to any one of the preceding claims,
    furthermore designed for acquiring and issuing at least one characteristic value relating to the fill level in the second sub-region (601).

9.  The measuring device according to any one of the preceding claims,
    wherein determining the at least one characteristic value relating to the position of an actually existing or virtual separating layer between two different liquids in the second region (601), or determining the at least one characteristic value relating to the composition of the mixture comprising the two different liquids takes place without the aid of capacitive measuring.

10. A method for measuring emulsion and/or for measuring separating layer according to a radar principle and/or according to the principle of the guided microwave, the method comprising the following steps:

    determining at least one characteristic value relating to the fill level of two different liquids, and determining at least one characteristic value relating to the position of a separating layer between the two liquids in a first sub-region of a container;
    determining at least one characteristic value relating to the fill level of the two liquids in a second sub-region of the container;
    calculating at least one characteristic value relating to the position of an actually existing or virtual separating layer between the two liquids in the second sub-region of the container with the use of the characteristic values obtained in the first two steps, as well as with the use of the density ratio of the two liquids.

**11.** The method according to claim 10, further comprising the step of:
determining the density ratio of the two liquids by means of a measurement, in which the at least one characteristic value relating to the fill level of the two different liquids and at least one characteristic value relating to the position of the separating layer between the two liquids in the first and the second sub-regions of the container is determined.

**12.** The method according to claim 10 or 11,
wherein the method is carried out by a measuring device (600) according to any one of claims 1 to 10.

**13.** The method according to claim 11 or 12, further comprising the step of:
mixing the two liquids in the second sub-region after the density ratio has been determined and before the first two steps have been carried out.

**14.** The use of a measuring device (600) according to any one of claims 1 to 9 for carrying out the method according to any one of claims 10 to 13.

**Revendications**

**1.** Dispositif de mesure (600) fonctionnant selon le principe d'un radar et/ou un procédé utilisant le principe des micro-ondes guidées, le dispositif comportant :

un réservoir (605) pour recevoir un premier liquide et un second liquide ayant une densité inférieure au premier liquide, et comportant une première sous-zone (602), une seconde sous-zone (601) et une ou plusieurs liaisons (603, 604) entre les deux sous-zones (601, 602) pour échanger du liquide entre les deux sous-zones (601, 602),
des premiers moyens de mesure (610) pour détecter une première courbe d'écho qui représente en image les coefficients de réflexion à l'intérieur de la première sous-zone (602),
des seconds moyens de mesure (611) pour détecter au moins une seconde courbe d'écho qui représente en image les coefficients de réflexion à l'intérieur de la seconde sous-zone (601),
une unité d'analyse (110),
dans lequel l'unité d'analyse (110) est adaptée pour déterminer une première distance électrique jusqu'à la surface du second liquide dans la première sous-zone en utilisant la première courbe d'écho,
dans lequel l'unité d'analyse (110) est adaptée pour déterminer une deuxième distance électrique jusqu'à une couche d'interface entre les deux liquides dans la première sous-zone en utilisant la première courbe d'écho,
dans lequel l'unité d'analyse (110) est adaptée pour déterminer une troisième distance électrique jusqu'à la surface du second liquide dans la seconde sous-zone en utilisant la seconde courbe d'écho, dans lequel la première distance électrique est différente de la troisième distance électrique,
dans lequel l'unité d'analyse (110) est adaptée pour déterminer au moins une valeur caractéristique de la position d'une couche d'interface réellement présente ou virtuelle entre deux liquides différents dans la seconde sous-zone (601), ou pour déterminer au moins une valeur caractéristique de la composition du mélange constitué des deux liquides différents,
dans lequel l'unité d'analyse (110) utilise la première, la deuxième et la troisième distances électriques ainsi que le rapport de densité des deux liquides pour déterminer la position de la couche d'interface réellement présente ou virtuelle dans la seconde sous-zone, ou pour déterminer la valeur caractéristique de la composition du mélange constitué des deux liquides différents,
dans lequel la première sous-zone (602) et les liaisons (603, 604) entre les deux sous-zones (601, 602) sont adaptées de telle sorte qu'en ajoutant une certaine quantité de liquide dans la seconde sous-zone (601), le niveau d'une colonne de liquide se formant dans la première sous-zone (602) n'est pas égal au niveau d'une colonne de liquide dans la seconde sous-zone (601).

**2.** Dispositif de mesure selon la revendication 1,
dans lequel la première sous-zone (602) du réservoir (605) est formée par l'espace intérieur d'un tuyau vertical.

**3.** Dispositif de mesure selon la revendication 1,
dans lequel la première sous-zone (602) du réservoir (605) est formée par un tuyau de dérivation du réservoir.

**4.** Dispositif de mesure selon l'une des revendications précédentes,
dans lequel la liaison (603, 604) entre les deux sous-zones (601, 602) est formée par une première ouverture (603) dans la première sous-zone (602) du réservoir (605) qui se situe à proximité du fond de réservoir (620), et par une seconde ouverture (604) dans la première sous-zone (602) du réservoir (605) qui se situe au-dessus des deux liquides lorsque le réservoir (605) est correctement rempli.

5. Dispositif de mesure selon l'une des revendications précédentes, dans lequel les premiers moyens de mesure (610) et les seconds moyens de mesure (611) sont identiques.

6. Dispositif de mesure selon l'une des revendications précédentes, dans lequel les premiers et/ou seconds moyens de mesure (611) sont des moyens de mesure qui émettent un signal d'émission électromagnétique ou un signal d'émission acoustique.

7. Dispositif de mesure selon l'une des revendications précédentes,

dans lequel les premiers moyens de mesure (610) fonctionnent selon le principe des micro-ondes guidées et comportent un conducteur intérieur (104) qui est agencé à l'intérieur de la première sous-zone (602), dans lequel le conducteur intérieur (104) et une paroi de la première sous-zone (602) forment un conducteur coaxial de sorte que la courbe d'écho à l'intérieur de la première sous-zone (602) est déterminée à l'aide du conducteur coaxial formé à partir du conducteur intérieur et de la paroi de la première sous-zone.

8. Dispositif de mesure selon l'une des revendications précédentes, en outre adapté pour détecter et délivrer en sortie au moins une valeur caractéristique du niveau de remplissage dans la seconde sous-zone (601).

9. Dispositif de mesure selon l'une des revendications précédentes, dans lequel la détermination de la au moins une valeur caractéristique de la position d'une couche d'interface réellement présente ou virtuelle entre deux liquides différents dans la seconde sous-zone (601) ou de la au moins une valeur caractéristique de la composition du mélange constitué des deux liquides différents s'effectue sans l'aide d'une mesure capacitive.

10. Procédé de mesure d'émulsion et/ou de mesure de couche d'interface selon le principe d'un radar et/ou selon le principe des micro-ondes guidées, le procédé comportant les étapes suivantes consistant à :

déterminer au moins une valeur caractéristique du niveau de remplissage de deux liquides différents et déterminer au moins une valeur caractéristique de la position d'une couche d'interface entre les deux liquides dans une première sous-zone d'un réservoir, déterminer au moins une valeur caractéristique du niveau de remplissage des deux liquides dans une seconde sous-zone du réservoir, calculer au moins une valeur caractéristique de la position d'une couche d'interface réellement présente ou virtuelle entre les deux liquides dans la seconde sous-zone du réservoir en utilisant la valeur caractéristique obtenue lors des deux premières étapes ainsi que le rapport de densité des deux liquides.

11. Procédé selon la revendication 10, comportant en outre l'étape consistant à : déterminer le rapport de densité des deux liquides au moyen d'une mesure, dans lequel la au moins une valeur caractéristique du niveau de remplissage des deux liquides différents et au moins une valeur caractéristique de la position de la couche d'interface entre les deux liquides sont déterminées dans la première et la deuxième sous-zones du réservoir.

12. Procédé selon la revendication 10 ou 11, dans lequel le procédé est mis en oeuvre par un dispositif de mesure (600) selon l'une des revendications 1 à 10.

13. Procédé selon la revendication 11 ou 12, comportant en outre l'étape consistant à : mélanger les deux liquides dans la seconde sous-zone, après la détermination du rapport de densité et avant l'exécution des deux premières étapes.

14. Utilisation d'un dispositif de mesure (600) selon l'une des revendications 1 à 9 pour mettre en oeuvre le procédé selon l'une des revendications 10 à 13.

Fig. 1

Fig. 2

Fig. 3

Fig. 4

Fig. 5

Fig. 6

Fig. 7

611    610

112

A    B

601

802

806

$d_{LA}$    $d_{LB}$    $d_{IB}$

$d_B$

602

805    804

605

803

801

## Fig. 8

901

Spannung
A

0    $D_{LA}$    el. Distanz D

902

Spannung
B

0    $D_{LB}$    $D_{IB}$    el. Distanz D

## Fig. 9

Fig. 10A

Fig. 10B

Fig. 10C

Fig. 10D

Fig. 10E

Fig. 10F

Fig. 11

Fig. 12

Fig. 13

Fig. 10G

Fig. 10I

Fig. 10H

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007061574 A1
- US 2001010171 A1
- US 5062295 A
- DE 10325953 A1